# EUROPEAN PATENT SPECIFICATION

(11) **EP 0 688 987 B1**
(45) Date of publication and mention of the grant of the patent: **06.05.1998**
(21) Application number: 95905151.7
(22) Date of filing: 11.01.1995
(51) Int. Cl.: F16K 21/18, F16K 31/34, E03D 1/32

(54) **IMPROVEMENTS TO SILENT OR QUICK STOPCOCKS FOR FILLING TANKS WITH ODORLESS FLUIDS**
VERBESSERUNGEN AN SCHNELL ODER LEISE SCHLIESSENDEN VENTILEN ZUM FÜLLEN DES WASSERTANKS EINER TOILETTE
AMELIORATIONS APPORTEES A DES ROBINETS DE FERMETURE RAPIDE ET SILENCIEUSE POUR LE REMPLISSAGE DE CITERNES AVEC DES FLUIDES INODORES

(30) Priority: 11.01.1994 ES 9400045
(43) Date of publication of application: 27.12.1995
(73) Proprietor: Fominaya Agullo, Pablo, 46120 Alboraya (ES)
(72) Inventor: Fominaya Agullo, Pablo, 46120 Alboraya (ES)
(74) Representative: Ungria Lopez, Javier
(86) International application number: ES9500008
(87) International publication number: WO9518932

(56) References cited:
- EP-A- 0 118 647
- US-A- 3 194 258

## Description

### OBJECT OF THE INVENTION

As expressed in the title of this specification, the present invention refers to some improvements in silent or quick stopcocks for filling toilet tanks.

These cocks provide advantages, among which the perfect operation at any water pressure in the main, the low manufacturing cost and the possibility to operate as a common cock, that is to say, sealing by thrust of the rubber upon the float rising, when there is no pressure in the water supply, are worth emphasizing.

As it normally happens when the toilet is flushed, the quick stopcock is responsible for reestablishing the suitable level silently.

### BACKGROUND OF THE INVENTION

Conventionally, there are different types of quick or silent stopcocks filling toilet tanks, which have a close functional relationship.

In principle, the water is poured into the tank and sealing is achieved by the effect of the pressure that the water main itself exerts on a sealing. Therefore, closing is instant and rapid, whereby the progressive closing that makes noise is eliminated.

This type of cock, up to the present, can be said to have important technical problems, especially due to the fact that they only operate at very specific pressures, in such a way that when the values are high or too low, these conventional cocks become blocked and unserviceable very easily.

Others, that operate with micrometric measurements for the water passages, also clog up very easily and of course they fail to operate.

On the other hand, present quick stopcocks for filling tanks do not operate without water pressure or with a slight supply of the same.

Some cocks that seem to operate acceptably overcoming the problems mentioned above are known, though they are very large and costly to manufacture.

Among known registrations that have some of the above cited inconveniences, Spanish Patent of Invention no. P-9001516/9, Spanish Utility Model no. U-244814, and Spanish Utility Model no. 246.739 are worth mentioning.

As prior art of the filler cock that uses a vertical tube to lead the water to the bottom of the tank and to eliminate noise one should also mention: Spanish Utility Model no. 271.378, though it uses a mechanical sealing system by thrust of the arm connected to the float.

### DESCRIPTION OF THE INVENTION

To solve the above mentioned problems, the invention proposes some quick or silent stopcocks for filling toilet tanks, wherein some improvements, which are the object of the present invention, have been introduced.

The most important feature is that perfect operation is achieved at any pressure whether it is high or low.

The quick or silent stopcock is defined by a body that includes a water inlet tube, as well as a vertical outlet tube for filling the tank, there being the possibility to insert a cleaning filter. The outlet tube as well as the inlet tube may take on the most convenient direction. By means of the help of an outer binding nut, a tube-shaped part is coupled to this body, forming between the tube-shaped part and said body, the location or cavity for housing the inside elements of the cock that will control sealing.

Two rubber bands facing each other, front and back, inserted between the body and the tube-shaped part are fit in the center of said cavity or site, there being between both rubber bands a middle chamber that communiwith a rear chamber, by means of a hole in the second rubber band, said rear chamber having corresponding to the tube-shaped part, a narrowing wherein a movable or shiftable body provided with a longitudinal hole is adjusted, said shiftable body being able to contact with a plunger upon which a conventional lever linked to the corresponding float acts.

On the other hand, the middle chamber communicates with the inlet tube by means of a narrow hole made in the front rubber band and in which an integral rod of a center part provided with some openings to allow the flow of fluid fits loosely. Concentric to this inlet tube, there is provided another larger one that communicates the first one with the tank, by means of the outlet tube, preferably vertical. Preferably, these two concentric tubes are related, with each other, by means of the front rubber band, which depending on the position thereof, will allow the flow of water from the inlet tube to the larger concentric tube, and from there, to the outlet tube.

Hence, when the tank is empty, the water vein will pass through the inlet tube until it reaches the larger tube, passing from the latter to the tank by means of the outlet tube. During this filling stage and thanks to the water pressure of the main, a deviation of the fluid through the narrow hole made in the front rubber band is produced, fluid which floods the middle chamber and then passes through thehole of the rear rubber band, also flooding the rear chamber. This rear chamber includes a drain tube that prevents the increase of pressure during the filling process, which would cause malfunctioning.

When the fluid in the tank reaches the proper level, the flow of the fluid will automatically be stopped by the float linked to the lever that will act on the plunger, displacing it axially towards the inside, drawing in its movement the movable body with the longitudinal hole, said body covering the hole of the rear rubber band. In this way, the flow of fluid stops in the middle chamber where the pressure of the water will push both rubber bands in opposite directions, so that the front rubber band will prevent the flow of the fluid from the inlet tube to the outlet tube.

When the tank is empty, the plunger returns to its initial position and with it all the other elements, with which the flow of water will start again until the tank fills up again.

Preferably, this plunger includes in its inside end, a sealing that is the one that closes up the longitudinal hole of the inside movable body.

The fine rod that passes through the hole of the front rubber band, adjusts the flow of the fluid to the middle chamber. Likewise, the movement of the front rubber band over the rod, aids in the continuous cleaning of the existing small concentric passage.

The movable passage that includes the longitudinal hole, aside from sealing the hole of the rear rubber band when necessary, receives the thrust therefrom after sealing. For this reason, it is provided for that it knocks against an inside step of the tube-shaped part that houses the plunger, in such a way that it retains the pressure of the withdrawal of the rear rubber band and this is not excessively transmitted to the float, by way of the plunger; these last two elements enduring only the sealing pressure of the longitudinal hole.

Finally, it should be pointed out, that the cock of the invention, also operates perfectly when the flow of water supplied by the main is minimal, in other words, when it is "drop by drop".

Hereinafter to provide a better understanding of this specification and forming an integral part of the same, a series of figures wherein the object of the invention has been represented in an illustrative and non-restrictive manner, is attached hereto.

### BRIEF DESCRIPTION OF THE DRAWINGS

Figure 1 is a raised section view of a silent or quick stopcock for filling toilet tanks, object of the invention.

Figure 2 is a view similar to the previous one, where the inlet tube is vertical and comprised of a telescopic section to adapt to different tank heights.

Figure 3 is another section view wherein one mainly sees coupling to the cock by the outlet tube, according to the diameter used and the type of flusher to which it is applied.

Figure 4 is a view of another coupling to the outlet tube different from the previous figure.

Figures 5, 6 and 7 are different sealing options of the longitudinal drain hole of the shiftable body, whose operating surface is made conical to improve the closing.

### DESCRIPTION OF THE PREFERRED EMBODIMENT

Referring to the numbering used in the figures, the silent or quick stopcocks for filling toilet tanks include some improvements which are the object of the invention.

The quick or silent stopcock is comprised of a body (1) that includes a fluid inlet tube (2) that can take on the most convenient direction, and also an outlet tube (3) preferably vertical, through which the water passes to the tank. There is also the possibility of including a cleaning filter (4) in the inlet area of the cock. Besides, by means of the help of an outer binding nut (5), a tube-shaped part (6) is coupled to the body (1), forming between the tube-shaped part and said body (1), the location or cavity for housing the inside elements of the cock that will control sealing.

There are two perimetrically connected rubber bands, front one (7) and rear one (8), facing each other in the center of said inside cavity and they are inserted between the body (1) and the tube-shaped part (6); defining between both rubber bands a middle chamber (9) that communicates in one direction with a rear chamber (10) through a hole (11) of the second rubber band (8), said rear chamber (10) belonging to the tube-shaped part (6) having a narrowing (12) where a shiftable body (13) provided with a longitudinal drain hole (14) adjusts, at the same time that it contacts with the plunger (15), upon which the conventional lever (16) connected to the corresponding float acts.

The middle chamber (9) communicates in the other direction with the inlet tube (2) of the water main, through a narrow hole (17) wherein a fine rod (18) integral with a center part (19) provided with some openings (20) to allow the flow of fluid, adjusts loosely. Concentric to this inlet tube (2), there is another larger tube (21) that communicates the first one with the tank, by means of the outlet tube (3), preferably vertical.

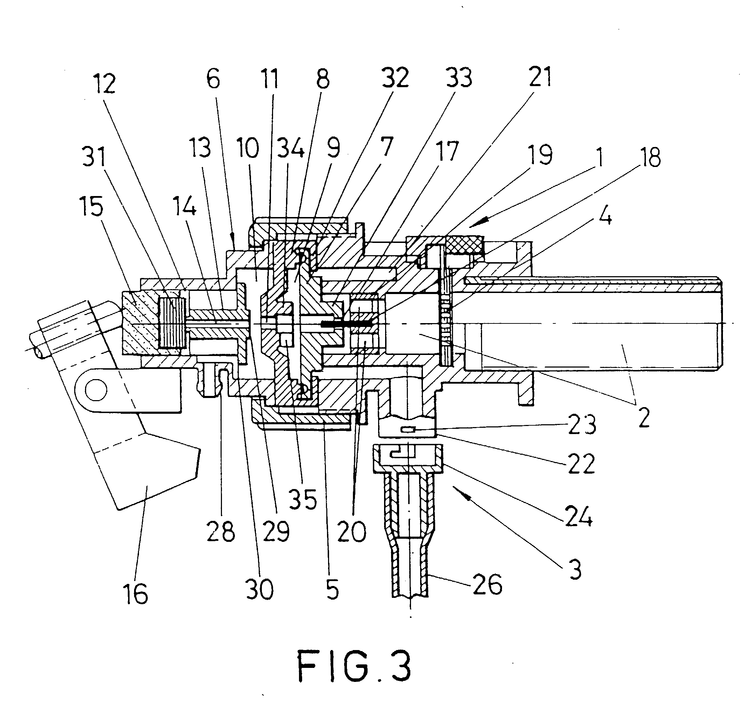

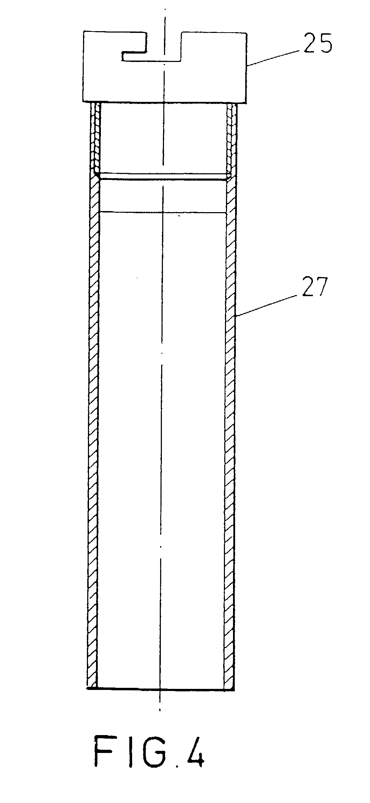

As we see in figure 3, this outlet tube (3) will preferably consist of a first rather short section (22), provided with two radially opposite stubs (23), for bayonet coupling. An adapter (24) (figure (3) or 25 (figure 4), that will be used respectively for the use of a flexible outlet tube (26) with a reduced diameter and applicable to hydropneumatic flushers, or a tube with a larger diameter (27) for conventional flushers that lead the water to the bottom of the tank, considerably reducing the murmur of the water upon descending, will fit in these stubs (23).

The cited concentric tubes (2) and (21) are related, to each other, by means of the front rubber band (7), which depending on the position thereof, will allow the flow of water from the inlet tube (2), to the larger concentric tube (21) and from here to the outlet tube (3).

Hence, when the tank is empty, the water vein will pass through the inlet tube (2) until it reaches the larger tube (21), passing from the latter to the tank through the outlet tube (3). During this filling stage and thanks to the water pressure of the main, a deviation of the fluid through the narrow hole (17) made in the front rubber band (7) is produced, fluid which floods the middle chamber (9) and then passes through the hole (11) of the rear rubber band (8), also flooding the rear chamber (10), that includes a drain tube (28), which together with the longitudinal hole (14) also a drain hole located in the shiftable body (13), advantageously prevent the increase of pressure during the filling process, which would cause malfunctioning.

When the fluid in the tank reaches the proper level, the flow of the fluid will automatically be stopped by the float linked to the lever (16), which will act on the plunger (15), displacing it axially towards the inside, drawing in its movement the movable body (13) provided with the longitudinal drain hole (14), said body (13) covering with its front (29) the hole of the rear rubber band (8). In this way, the flow of fluid stops in the middle chamber (9) where the pressure of the water will push both rubber bands (7) and (8) in opposite directions, so that the front band (7) will prevent the flow of the fluid from the inlet tube to the outlet tube while the rear rubber band (8) pushes on the shiftable body (13), which knocks against an inside step (30) belonging to the tube-shaped part (6).

Until they have knocked against each other, the plunger (15) has also received thrust of the rubber band, then it has moved against the action of the lever (16), therefore, even the float experiences this thrust that converts into a small recess. In this way, a closed set of forces is established, where the float pushes in the direction opposite to that in which the rear rubber band (8) pushes. Nonetheless, the plunger (15) finally only endures the pressure of the inside fluid of the chamber (9) transmitted by holes (11) and (14).

When the tank is empty, the plunger (15) returns to its initial position. In this way, the longitudinal drain hole (14) opens and lets out the pressure accumulated in the middle chamber (9), therefore, all the elements return to their original position and the circulation of water will start again until the tank fills up again.

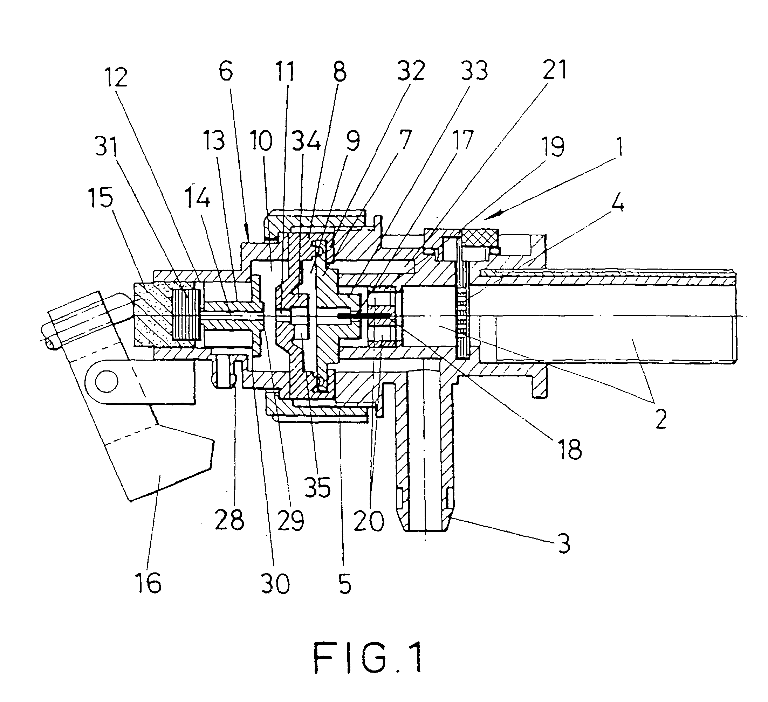

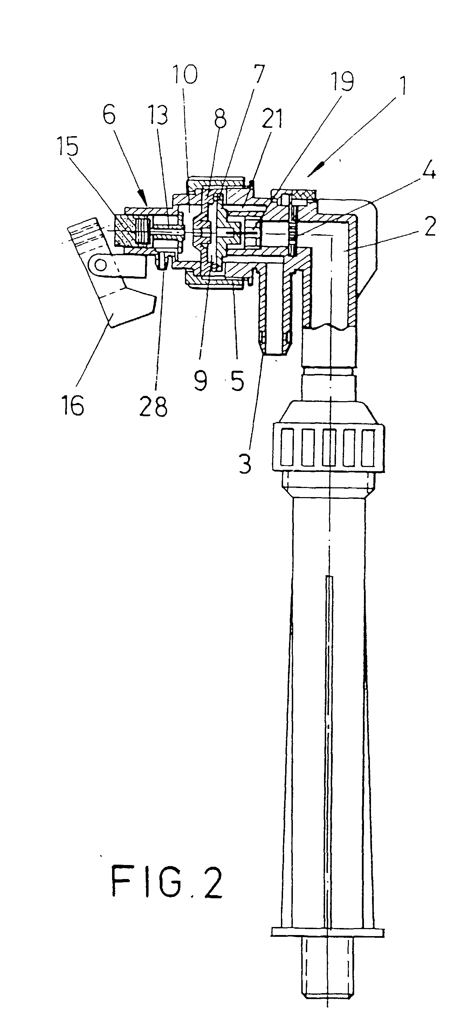

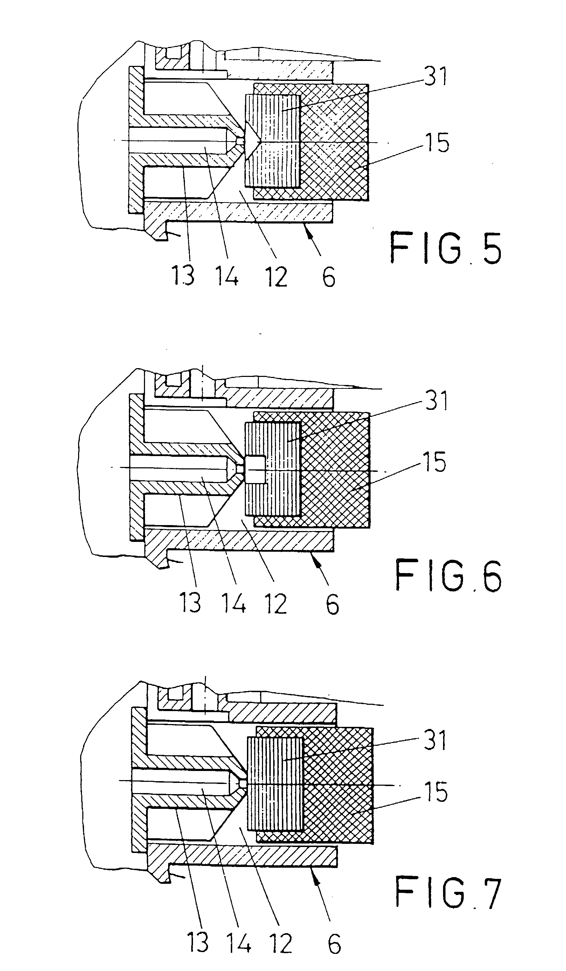

On the other hand, the plunger (15) includes in its inside end, a sealing (31) that is the one that closes the longitudinal drain hole (14) of the movable body (13). This rubber band (31) can be flat (figures 1, 2, 3 and 7) or it may have a center conical or prismatic seat (figures 5 and 6 respectively), in which the movable body (13), that can also be flat (figures 1, 2 and 3) or slightly conical (figures 5, 6 and 7) to aid sealing, adjusts.

The fine rod (18) that passes through the hole (17) of the front rubber band (7), adjusts the flow of the fluid to the middle chamber (9), in such a way that it is not necessary to make a minute hole, which would easily clog up, at the same time that it would technically be very difficult to make, due to the material characteristics of the rubber band. Likewise, the small displacement of the front rubber band (7) over the rod (17), aids continuous cleaning of the existing small concentric passage.

The movable body (13) that includes the longitudinal drain hole (14), aside from sealing the hole of the rear rubber band (8) when necessary, receives the thrust therefrom after sealing. Therefore, as we have already indicated above, it is provided for that it knock against an inside step (30) of the tube-shaped part (6) that houses the plunger (15), in such a way that it retains the pressure of the withdrawal of the rear rubber band (8) and this is not excessively transmitted to the float, by way of the plunger (15); these last two elements enduring only the sealing pressure of the longitudinal hole (14). In this way, we limit in a desired amount the withdrawal of the rear rubber band (8), whereby we take advantage of the pressure existing in the middle chamber (9) more efficiently in order to correctly carry out the closings.

The center part (19) that supports the rod (18) and that is located in the inlet tube (2) can be independent, in other words, inserted in its location, or it may form an integral part of the body itself (1).

On the other hand, the assembly and design of the front (7) and rear (8) rubber bands, conceived to avoid the smallest leak of the fluid from its inside cavity to the outside, are very important. The way the two are connected, produces a self-tightening effect as a result of the pressure of the water inside it tending to seek a leak and moving inside to both rubber bands (7) and (8) in opposite directions, which converts into greater outside tightening of the connection.

The rear rubber band (8) has a perimetric flap (32) that surrounds the contour of the front rubber band (7) to obtain the above mentioned self-tightening effect. If we eliminate this flap, the rubber bands can optionally remain connected hermetically by gluing or the like. This perimetric flap (32) can also be located in the front rubber band (7), achieving the same effect as in the previous case.

On the other hand, we will describe the second operating option of this new cock that is produced when the supply main does not provide enough pressure, or when there is a minimal flow, that is to say, "drop to drop" of the fluid. It is then when the cock reveals its versatility, mechanically sealing (without the participation of pressures of the fluid). The float, pushes the plunger (15) towards the inside as the level of water of the tank rises, transmitting the thrust to the movable part (13), which ends up contacting with the rear rubber band (8) which in turn, folds inward and produces center contact with the front rubber band (7) that is pushed towards the closing area of the inlet tube (2), producing the interruption of the flow of fluid towards the outlet tube (3).

As to the front rubber band (7), it receives intake of pressurized fluid through the hole (17), as we have already said; nonetheless, it is necessary to capture the fluid before the flow loses pressure upon passing to the outlet tube (3). For this purpose, said rubber band (7) is provided with a center projection (33) introduced inside the inlet tube (2) very close to the center part (19). In this way, the intake of fluid is done under full pressure, which facilitates the correct operation of the cock.

It is also important to point out that this front rubber band (7) in the inoperative position, that is to say, without a water intake takes on a vertical position contacting perimetrically with the sealing area of the inlet tube (2). In this way, the closing over said area is more easily produced notably facilitated by the natural position of said front rubber band (7).

Likewise, the rear rubber band (8) includes in the center of its inside surface, a projection (34) provided optionally with a radial groove (35) that permits the flow of fluid to the middle chamber (9), even when the front rubber band (7) becomes deformed and comes in contact with said projection (34), which prevents that by this effect the flow of fluid to the middle chamber (9) stops and therefore, that the operation of the cock is incorrect.

On the other hand, this cock can take advantage of the center tube of the float.

Finally and insisting on the silent feature of the new cock, it should be pointed out, that this quality is notably enhanced inasmuch as there is no reduction of flow of water in the outlet (3) and it is even possible that this outlet tube (3) has a greater flow; in both cases, the murmur of the flow of liquid, upon not being throttled is greatly reduced and favors the silent condition of the cock.

## Claims

1. Silent or quick stopcock for filling toilet tanks, the cock being of the type that comprises a body (1) that includes a fluid inlet tube (2) and an outlet tube (3), coupling to said body (1) a tube-shaped part (6) secured by an outer binding nut (5), defining between the body (1) and the tube-shaped part (6), an inside cavity to house the elements that will control sealing; also including a float connected to an operating leve (16) to produce the sealing of the fluid; characterized in that in the center of the inside cavity of the body (1) there are two perimetrically connected elastic rubber bands (7,8) facing each other, a front one (7) and a rear one (8), inserted between the body (1) and the tube-shaped part (6), defining between both rubber bands (7,8) a middle chamber (9) that communicates in one direction with a rear chamber (10) through a hole (11) of the second rubber band (8), said rear chamber (10) having a narrowing (12) wherein a shiftable body (13) provided with a longitudinal drain hole (14) is adjusted, said shiftable body (13) being able to contact with a plunger (15), upon which the lever (16) connected to the corresponding float acts; the middle chamber (9) communicates in the other direction with the inlet tube (2) through a narrow hole (17) made in the front rubber band (7) and wherein a rod (18) integral with a center part (19) provided with some openings (20) to permit the flow of fluid is adjusted loosely; said center part (19), placed in the inlet area of the body (1) is either independent or forms an integral part of the body (1); concentric to this inlet tube (2) there is provided another larger one (21) that communicates the first one with the tank through the outlet tube (3); the rear chamber (10) belonging to the tube-shaped part (6) communicates with the outside by means of a drain tube (28) that prevents an unnecessary pressure increase during the filling process of the tank; preferably, the inlet tube (2) is vertical.

2. Silent or quick stopcock for filling toilet tanks according to the above claim, characterized in that the plunger (15) includes on its front and inside surface where the movable body (13) is pushed, a sealing (31) that closes the longitudinal hole (14) of said movable body (13) when necessary, the latter including on the other hand, a front projection (29) to plug the hole (11) of the rear rubber band (8); it being provided for that the movable body (13) is capable of knocking in its withdrawal against an inside step (30) of the tube-shaped part (6).

3. Silent or quick stopcock for filling toilet tanks according to claim 1, characterized in that the rear rubber band (8) either has a self-tightening perimetric flap (32) that surrounds the contour of the front rubber band (7) or the connection between both rubber. bands (7) and (8) is secured by glue or the like.

4. Silent or quick stopcock for filling toilet tanks according to claim 1, characterized in that the front rubber band (7) is integrally formed with a perimetric flap (32) surrounding the contour of the rear rubber band (8).

5. Silent or quick stopcock for filling toilet tanks according to claim 1, characterized in that the outlet tube (3) comprises a first rather short section (22), provided with two radially placed stubs (23), in which a tube-shaped adapter (24 or 25) to which a flexible outlet tube (26) or another one with a larger diameter (27), respectively, is fastened, is coupled, depending on the the type of flusher that the tank has.

6. Silent or quick stopcock for filling toilet tanks according to claim 1, characterized in that the front rubber band (7) is provided on the outside surface where the fluid intake is received, with a center projection (33) that extends towards the inside of the inlet tube (2).

7. Silent or quick stopcock for filling toilet tanks according to claim 1, characterized in that the rear rubber band (8) has in the center of its inside surface, a projection (34) provided with a small radial groove or passage (35) that communicates the hole (11) of the rear rubber band (8) with the middle chamber (9).

8. Silent or quick stopcock for filling toilet tanks according to claim 1, characterized in that the front rubber band (7) in the inoperative state, in other words, without the flow of water, takes on a vertical position contacting perimetrically with the sealing area of the inlet tube (2) for the purpose of facilitating the cutting off of the flow of fluid at the moment of closing.

## Patentansprüche

1. Leises oder schnelles Absperrventil zum Füllen von Toilettentanks, wobei das Ventil von dem Typ ist, der einen Körper (1) umfaßt, der eine Fluideinlaßröhre (2) und eine Auslaßröhre (3) enthält, wobei an dem Körper (1) ein röhrenförmiges Teil (6) angebracht ist, das mit einer Außen-Gegenmutter (5) befestigt ist, zwischen dem Körper (1) und dem röhrenförmigen Teil (6) ein Innenhohlraum ausgebildet ist, der die Elemente aufnimmt, die die Abdichtung steuern, wobei darüber hinaus ein Schwimmkörper enthalten ist, der mit einem Betätigungshebel (16) verbunden ist, um das Fluid abzuschließen, **dadurch gekennzeichnet**, daß in der Mitte des Innenhohlraums des Körpers (1) zwei am Umfang verbundene elastische Gummileisten (7,8) angeordnet sind, die einander zugewandt sind, d.h. eine vordere (7) und eine hintere (8), die sich zwischen dem Körper (1) und dem röhrenförmigen Teil (6) befinden, wobei zwischen beiden Gummileisten (7,8) eine Mittelkammer (9) ausgebildet ist, die in einer Richtung über ein Loch (11) der zweiten Gummileiste (8) mit einer hinteren Kammer (10) in Verbindung steht, wobei die hintere Kammer (10) eine Verengung (12) aufweist, in der ein verschiebbarer Körper (13), der mit einem Längsablaßloch (14) versehen ist, eingestellt wird, wobei der verschiebbare Körper (13) mit einem Kolben (15) in Kontakt kommen kann, auf den der mit dem entsprechenden Schwimmkörper verbundene Hebel (16) wirkt; die Mittelkammer (9) in der anderen Richtung mit der Einlaßröhre (2) über ein schmales Loch (17) in Verbindung steht, das in der vorderen Gummileiste (7) ausgebildet ist und in dem eine Stange (18), die eine Einheit mit einem Mittelteil (19) bildet, das mit einigen Öffnungen (20) versehen ist, um den Strom von Fluid zu ermöglichen, locker eingestellt ist; das Mittelteil (19), das im Einlaßbereich des Körpers (1) angeordnet ist, entweder unabhängig ist oder einen integralen Teil des Körpers (1) bildet; konzentrisch zu dieser Einlaßröhre (2) eine weitere größere (21) vorhanden ist, über die die erstere mit dem Tank über die Auslaßröhre (3) in Verbindung steht; die hintere Kammer (10), die zu dem röhrenförmigen Teil (6) gehört, mit der Außenseite über eine Ablaßröhre (28) in Verbindung steht, die eine unnötige Druckerhöhung während des Vorgangs des Füllens des Tanks verhindert; wobei die Einlaßröhre (2) vorzugsweise vertikal ist.

2. Leises oder schnelles Absperrventil zum Füllen von Toilettentanks nach obenstehendem Anspruch, **dadurch gekennzeichnet**, daß der Kolben (15) an seiner Vorder- und Innenfläche, an der der bewegliche Körper (13) geschoben wird, eine Dichtung (31) enthält, die das Längsloch (14) des beweglichen Körpers (13), wenn erforderlich, verschließt, wobei letzterer andererseits einen vorderen Vorsprung (29) enthält, der das Loch (11) der hinteren Gummileiste (8) verschließt, wobei der bewegliche Körper (13) bei seinem Herausziehen an einen Innenabsatz (30) des röhrenförmigen Teils (6) anschlagen kann.

3. Leises oder schnelles Absperrventil zum Füllen von Toilettentanks nach Anspruch 1, **dadurch gekennzeichnet**, daß die hintere Gummileiste (8) entweder eine selbstspannende Umfangslasche (32) aufweist, die den Umfang der vorderen Gummileiste (7) umgibt, oder die Verbindung zwischen beiden Gummileisten (7) und (8) durch Klebstoff oder dergleichen gesichert wird.

4. Leises oder schnelles Absperrventil zum Füllen von Toilettentanks nach Anspruch 1, **dadurch gekennzeichnet,** daß die vordere Gummileiste (7) integral mit einer Umfangslasche (32) ausgebildet ist, die den Umfang der hinteren Gummileiste (8) umgibt.

5. Leises oder schnelles Absperrventil zum Füllen von Toilettentanks nach Anspruch 1, **dadurch gekennzeichnet**, daß die Auslaßröhre (3) einen ersten, relativ kurzen Abschnitt (22) umfaßt, der mit zwei radial angeordneten Nasen (23) versehen ist an denen ein röhrenförmiges Anschlußstück (24 oder 25) angebracht wird, an dem, je nach dem Typ von Spüleinrichtung, die der Tank hat, eine flexible Auslaßröhre (26) bzw. eine andere mit einem größeren Durchmesser (27) befestigt wird.

6. Leises oder schnelles Absperrventil zum Füllen von Toilettentanks nach Anspruch 1, **dadurch gekennzeichnet**, daß die vordere Gummileiste (7) an der Außenseite, an der der Fluideinlaß aufgenommen ist, mit einem mittigen Vorsprung (33) versehen ist, der sich zur Innenseite der Einlaßröhre (2) hin erstreckt.

7. Leises oder schnelles Absperrventil zum Füllen von Toilettentanks nach Anspruch 1, **dadurch gekennzeichnet,** daß die hintere Gummileiste (8) in der Mitte ihrer Innenseite einen Vorsprung (34) aufweist, der mit einer kleinen radialen Nut bzw. einem Durchlaß (35) versehen ist, der das Loch (11) der hinteren Gummileiste (8) mit der mittleren Kammer (9) verbindet.

8. Leises oder schnelles Absperrventil zum Füllen von Toilettentanks nach Anspruch 1, **dadurch gekennzeichnet**, daß die vordere Gummileiste (7) im Ruhezustand, d.h., ohne den Strom von Wasser, eine vertikale Position einnimmt, in der sie am Umfang mit dem Abdichtbereich der Einlaßröhre (2) in Kontakt ist, um das Absperren des Stroms von Fluid im Moment des Schließens zu erleichtern.

## Revendications

1. Robinet d'arrêt rapide ou silencieux destiné au remplissage des réservoirs de toilettes, le robinet étant du type qui comporte un corps (1) qui comprend un tube (2) d'entrée de fluide et un tube (3) de sortie de fluide, raccordant au corps (1) une partie (6) en forme de tube fixée par un écrou externe (5) de fixation, délimitant entre le corps (1) et la partie (6) en forme de tube une cavité interne destinée à loger les éléments qui règlent la fermeture étanche, et comprenant un flotteur raccordé à un levier de manoeuvre (16) pour assurer l'étanchéité du fluide, caractérisé en ce que, au centre de la cavité interne du corps (1), sont placées deux bandes élastiques de caoutchouc (7, 8) raccordées à la périphérie et tournées l'une vers l'autre, une bande avant (7) et une bande arrière (8), introduites entre le corps (1) et la partie (6) en forme de tube, avec délimitation entre les deux bandes de caoutchouc (7, 8) et une chambre médiane (9) qui communique dans une première direction avec une chambre arrière (10) par un trou (11) de la seconde bande de caoutchouc (8), la chambre arrière (10) ayant un rétrécissement (12) dans lequel un corps mobile (13) ayant un trou longitudinal de purge (14) est ajusté, le corps mobile (13) pouvant être au contact d'un plongeur (15) sur lequel agit le levier (16) raccordé au flotteur correspondant, la chambre médiane (9) communique dans l'autre direction avec le tube d'entrée (2) par un trou étroit (17) formé dans la bande avant (7) de caoutchouc, et dans lequel une tige (18) solidaire d'une partie centrale (19) ayant quelques ouvertures (20) destinées à permettre l'écoulement du liquide est ajustée avec du jeu, la partie centrale (19) placée dans la zone d'entrée du corps (1) est soit indépendante du corps (1) soit partie intégrante de celui-ci, une autre cavité plus grande (21) est disposée concentriquement à ce tube d'entrée (2) et fait communiquer la première chambre avec le réservoir par le tube de sortie (3), la chambre arrière (10) appartenant à la partie (6) en forme de tube communique avec l'extérieur par un tube de purge (28) qui empêche une élévation superflue de la pression pendant l'opération de remplissage du réservoir, et le tube d'entrée (2) est de préférence vertical.

2. Robinet d'arrêt rapide ou silencieux destiné au remplissage des réservoirs de toilettes selon la revendication précédente, caractérisé en ce que le plongeur (15) comporte, à sa surface avant et interne à l'endroit où le corps mobile (13) est poussé, un organe d'étanchéité (31) qui ferme le trou longitudinal (14) du corps mobile (13) le cas échéant, ce dernier comprenant d'autre part une saillie avant (29) destinée à boucher le trou (11) de la bande arrière de caoutchouc (8), et le corps mobile (13) peut venir frapper un gradin interne (30) de la partie (6) en forme de tube lors de son extraction.

3. Robinet d'arrêt rapide ou silencieux destiné au remplissage des réservoirs de toilettes selon la revendication 1, caractérisé en ce que soit la bande arrière de caoutchouc (8) possède un volet périphérique (32) assurant automatiquement l'étanchéité et qui entoure le contour de la bande avant de caoutchouc (7), soit la connexion entre les deux bandes de caoutchouc (7) et (8) est fixée par de la colle ou de manière analogue.

4. Robinet d'arrêt rapide ou silencieux destiné au remplissage des réservoirs de toilettes selon la revendication 1, caractérisé en ce que la bande avant de caoutchouc (7) est formée en une seule pièce avec un volet périphérique (32) entourant le contour de la bande arrière de caoutchouc (8).

5. Robinet d'arrêt rapide ou silencieux destiné au remplissage des réservoirs de toilettes selon la revendication 1, caractérisé en ce que le tube de sortie (3) comprend un premier tronçon relativement court (22) ayant deux plots radiaux (23), dans lequel un adaptateur (24 ou 25) en forme de tube auquel est fixé un tube souple (26) de sortie ou un autre tube de plus grand diamètre (27) est couplé, suivant le type de mécanisme de chasse que possède le réservoir.

6. Robinet d'arrêt rapide ou silencieux destiné au remplissage des réservoirs de toilettes selon la revendication 1, caractérisé en ce que la bande avant de caoutchouc (7) est placée à la surface externe à laquelle est reçu le fluide d'admission avec une saillie centrale (33) qui dépasse vers l'intérieur du tube d'entrée (2).

7. Robinet d'arrêt rapide ou silencieux destiné au remplissage des réservoirs de toilettes selon la revendication 1, caractérisé en ce que la bande arrière de caoutchouc (8) possède, au centre de sa surface interne, une saillie (34) ayant un petit passage ou gorge radial (35) qui fait communiquer le trou (11) de la bande arrière de caoutchouc (8) avec la chambre médiane (9).

8. Robinet d'arrêt rapide ou silencieux destiné au remplissage des réservoirs de toilettes selon la revendication 1, caractérisé en ce que la bande avant de caoutchouc (7), à son état inopérant, c'est-à-dire sans circulation d'eau, prend une position verticale au contact périphérique de la zone d'étanchéité du tube d'entrée (2) afin que l'arrêt de la circulation du liquide au moment de la fermeture soit facilité.
